# FASCICULE DE BREVET EUROPEEN

(11) **EP 3 554 873 B1**
(45) Date de publication et mention de la délivrance du brevet: **04.08.2021**
(21) Numéro de dépôt: 17804247.9
(22) Date de dépôt: 14.11.2017
(51) Int. Cl.: B60J 7/02, B62D 25/06

(54) **STRUCTURE DE VEHICULE AUTOMOBILE À TOIT OUVRANT, CADRE DE PAVILLON ET PAVILLON CORRESPONDANT**
KRAFTFAHRZEUGSTRUKTUR MIT SCHIEBEDACH, DACHRAHMEN UND ZUGEHÖRIGEM DACH
MOTOR VEHICLE STRUCTURE WITH SUNROOF, ROOF FRAME AND CORRESPONDING ROOF

(30) Priorité: 15.12.2016 FR 1662490
(43) Date de publication de la demande: 23.10.2019
(73) Titulaire: Renault S.A.S., 92100 Boulogne-Billancourt (FR)
(72) Inventeur: BEZEAULT, Loic, 78150 Le Chesnay (FR); HEWAK, Gregor, 95490 Vaureal (FR)
(86) Numéro de dépôt international: PCT/FR2017/053102
(87) Numéro de publication internationale: WO 2018/109295

(56) Documents cités:
- EP-A1- 0 723 903
- DE-A1- 19 949 468
- US-A1- 2010 038 933
- US-A1- 2010 066 130

## Description

L'invention a pour objet une structure de véhicule automobile à toit ouvrant. L'invention a également pour objet, les structures de haut de caisse de véhicules automobiles, et plus particulièrement les structures de haut de caisse pour véhicules comportant un toit ouvrant, le reste du toit pouvant être un toit tôlé, composite ou vitré (fixe). Les toits ouvrants ou fixes, peuvent être, de manière classique, posés sur un cadre de pavillon, lui-même formé par, ou assemblé sur, le haut de la caisse du véhicule. Une telle structure de véhicule automobile est connue par ex. des documents US 2010/038933 A1, DE 199 49 468 A1 et US 2010/066130 A1.

Le cadre peut comporter des sections profilées de type profil extrudé. Ces profils extrudés peuvent définir des bandes d'appui longitudinales s'étendant entre des poutres transversales de la caisse, appelées "brancards" de la caisse. Sur ces bandes d'appui, et sur les brancards, repose le bord de la vitre du toit ouvrant.

Ces supports larges extrudés réduisent l'espace disponible pour le passage de la lumière, et/ou pour l'ouverture qui peut être dégagée par le toit ouvrant. En outre, le moteur d'actionnement du toit ouvrant doit être placé soit au centre, soit en arrière du cadre, généralement au niveau de la séparation entre le cadre et la lunette arrière du véhicule. Or, cette séparation se trouve en général au-dessus ou très proche en arrière des passagers arrière, de sorte que la hauteur de l'habitacle est réduite et la vision haute des passagers arrière peut être limitée.

L'invention a pour objectif de remédier en tout ou partie aux inconvénients précités.

A cette fin, il est proposé une structure de véhicule automobile à toit ouvrant comprenant :
- une caisse comprenant en partie supérieure des brancards latéraux comprenant les bords supérieurs des ouvertures de portes latérales, une traverse avant de brancard et en partie arrière une traverse arrière inférieure dont est solidaire une structure de tablette s'étendant à l'intérieur d'un habitacle du véhicule arrière et recouverte d'une garniture,
- un cadre de pavillon définissant au moins une ouverture et étant configuré pour pouvoir servir de support à au moins un toit mobile obturant une partie de l'ouverture et à au moins une partie arrière vitrée formant un pare-brise arrière obturant une autre partie de l'ouverture, le cadre de pavillon comprenant au moins une traverse extrême avant et une traverse extrême arrière reliées par des poutres longitudinales.

Selon l'invention, le cadre de pavillon forme un cadre continu monté sur des faces supérieures des brancards latéraux, de la traverse avant de brancard et de la traverse arrière inférieure de la caisse, la traverse extrême arrière du cadre de pavillon étant montée sur la traverse arrière inférieure de la caisse. En outre, un support pour organe d'actionnement du toit mobile est disposé entre la structure de tablette arrière et sa garniture, à proximité de la traverse extrême arrière du cadre de pavillon.

Ainsi, l'organe d'actionnement du toit mobile peut être disposé dans une zone arrière de l'habitacle, au niveau de ce que l'on appelle communément la plage arrière d'un véhicule formée par la structure de tablette et sa garniture, autrement dit, dans une zone située en arrière des dossiers de sièges de deuxième rang du véhicule. Cet agencement permet d'augmenter la hauteur disponible sous le pavillon à l'intérieur de l'habitacle en libérant l'espace auparavant utilisé pour loger cet organe d'actionnement.

Par ailleurs, le cadre de pavillon s'étend jusqu'à la traverse arrière inférieure de la caisse qui forme usuellement un bord inférieur de la partie vitrée arrière formant pare-brise. Autrement dit, la caisse est dépourvue de traverse arrière de brancard susceptible de réduire la hauteur de l'habitacle, une telle traverse formant habituellement le bord supérieur de la partie vitrée arrière formant pare-brise.

On notera que la structure de véhicule automobile selon l'invention est plus particulièrement destinée aux véhicules comportant un coffre de rangement à l'arrière des sièges, accessible par un ouvrant situé en arrière de la traverse arrière inférieure de la caisse, autrement dit un ouvrant ne portant pas le pare-brise arrière.

En particulier, le cadre de pavillon peut ne définir que deux ouvertures : la partie arrière vitrée peut alors s'étendre de manière continue depuis la traverse extrême arrière du cadre jusqu'à une traverse interne du cadre la séparant du toit mobile. Les passagers arrière peuvent alors profiter d'une large visibilité et d'une hauteur d'habitacle optimale.

Avantageusement, la structure de tablette peut comprendre un logement recevant le support de l'organe d'actionnement. Ceci peut permettre de loger le support et l'organe d'actionnement sans modification de la garniture.

Dans une variante, le support de l'organe d'actionnement peut être intégré à la structure de tablette, et former par exemple le logement.

Dans une autre variante, le support de l'organe d'actionnement peut être solidaire du cadre de pavillon, notamment d'une portion de sa traverse extrême arrière. Il est ainsi possible de monter l'organe d'actionnement sur le cadre de pavillon avant de monter ce dernier sur la caisse du véhicule. En particulier, le cadre de pavillon et ses parties de toit mobiles et fixes peuvent être montées avant l'installation du cadre de pavillon sur la structure de véhicule.

Dans cette variante, la structure de tablette, ou son logement, peut participer au maintien du support de l'organe d'actionnement.

Avantageusement, le cadre de pavillon peut être de section creuse, par exemple de type tubulaire, par exemple formé par l'assemblage de deux demi-coques. Ceci permet d'obtenir une structure robuste.

Des éléments de câblage utiles à l'actionnement du toit mobile peuvent par ailleurs être logés à l'intérieur d'un cadre de pavillon de section creuse. Il n'est alors pas nécessaire de prévoir des logements supplémentaires pour ces éléments qui seraient susceptibles de réduire l'espace libre disponible autour du cadre de pavillon.

Par ailleurs, la structure de véhicule peut comprendre un organe d'éclairage intégré à la garniture, notamment situé au dessus du support pour l'organe d'actionnement. Les alimentations électriques de l'organe d'éclairage et de l'organe d'actionnement peuvent alors être rassemblées en un même endroit de la structure, facilitant le montage.

L'invention concerne également un cadre de pavillon, pouvant notamment être utilisé pour réaliser la structure de véhicule selon l'invention.

Ce cadre de pavillon définit au moins une ouverture et est configuré pour être assemblé sur des faces supérieures de brancards latéraux d'une caisse de véhicule automobile, ainsi que sur des faces supérieures d'une traverse avant de brancard et d'une traverse arrière de la caisse. Le cadre de pavillon est en outre configuré pour pouvoir servir de support à au moins un toit mobile et à au moins une partie arrière vitrée formant un pare-brise arrière Ces derniers obturent au moins en partie l'ouverture. Le cadre de pavillon comprend au moins une traverse extrême avant et une traverse extrême arrière reliées par des poutres longitudinales. Selon l'invention, le cadre forme un cadre continu. En outre, une portion de la traverse extrême arrière du cadre est solidaire d'un support destiné à soutenir un organe d'actionnement du toit mobile, ce support s'étendant en direction de la traverse extrême avant du cadre, du côté du cadre destiné à être assemblé à la caisse du véhicule.

Un tel support permet de déporter l'organe d'actionnement vers une zone de la structure n'impactant pas le volume interne de l'habitacle.

Avantageusement, pour une plus grande robustesse, le cadre peut être un cadre de section creuse, par exemple de type tubulaire. Ce cadre de section creuse, notamment de type tubulaire, peut comprendre un assemblage d'une demi-coque supérieure avec une demi-coque inférieure. De manière préférentielle, chacune des demi-coques peut s'étendre tout autour de l'ouverture de lumière.

Les demi-coques peuvent être collées entre elles, ou encore soudées (par exemple par soudage laser), bouterollées, ou assemblées par d'autres techniques connues telles que le vissage.

La coque supérieure et inférieure peuvent être par exemple moulées en matériau composite de type matrice PET (Polytéréphtalate d'éthylène) matrice PBT (Polytéréphtalate de butylène) ou matrice polyamide, par exemple chargée par 20 à 50% en masse de fibres de verre.

D'autres matériaux, notamment de type composite, de préférence aptes au soudage ou au collage, sont envisageables.

Les deux demi-coques peuvent éventuellement être réalisées en matières différentes entre elles.

Avantageusement, chacune des deux demi-coques forme une structure tridimensionnelle, dont la forme est apte à être démoulée sensiblement selon la direction d'accostage des demi-coques l'une sur l'autre.

L'invention concerne également un pavillon de véhicule automobile comprenant un cadre de pavillon selon l'invention, un toit mobile supporté en partie par la traverse extrême avant du cadre, une partie arrière vitrée supportée en partie par la traverse extrême arrière et un organe d'actionnement du toit mobile supporté par le support du cadre. Avantageusement, la partie arrière vitrée peut s'étendre en continu jusqu'à une traverse interne avant du cadre de pavillon la séparant du toit mobile. Dans ce cas, le cadre de pavillon définit deux ouvertures séparées par une traverse interne avant, de préférence située dans une zone entre les sièges de premier rang et les sièges de deuxième rang du véhicule.

De manière générale, le cadre de pavillon selon l'invention est de préférence dépourvu de traverse interne arrière, située au dessus, ou à proximité immédiate des sièges de deuxième rang.

Avantageusement, le cadre de pavillon peut former un cadre de section creuse, par exemple de type tubulaire, continu recevant des éléments de câblage utiles à l'actionnement du toit mobile.

L'invention est maintenant décrite en référence aux dessins annexés, non limitatifs, dans lesquels :
- la figure 1 est une vue simplifiée en perspective d'une structure de véhicule selon un mode de réalisation de l'invention sur laquelle sont visible une caisse, un cadre de pavillon et une garniture d'une structure de tablette ;
- la figure 2 est une vue simplifiée en perspective de la caisse représentée figure 1 ;
- la figure 3 est une section de l'arrière de la structure de véhicule représentée figure 1 selon la ligne A-A ;
- la figure 4 est une vue simplifiée en perspective du cadre de pavillon représenté figure 1 ;
- les figures 5a et 5b représentent respectivement une demi-coque inférieure et une demi-coque supérieure composant le cadre de pavillon de la figure 4 ;
- la figure 6 est une vue simplifiée en perspective de dessous de la partie arrière du cadre de pavillon de la figure 4.

Dans la présente description, les termes avant, arrière, supérieur, inférieur, font référence aux directions avant et arrière du véhicule, lorsque le cadre de pavillon est monté sur la caisse du véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

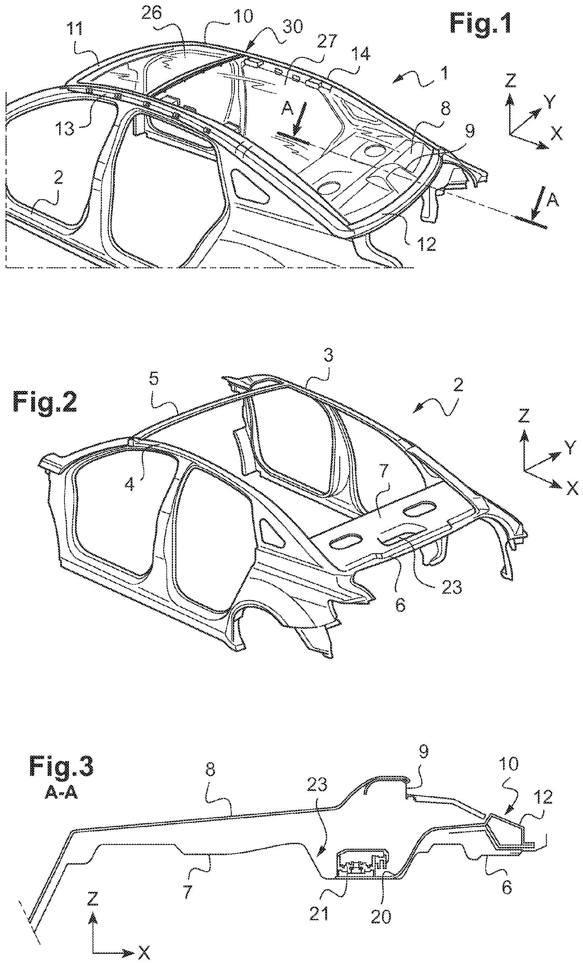

La figure 1 représente une structure de véhicule automobile 1 à toit ouvrant. Cette structure comprend une caisse 2. Celle-ci comporte des ouvrants tels que les portières latérales, ainsi que des zones vitrées correspondant au pare-brise avant et au pare-brise arrière. Les ouvertures correspondant aux ouvrants latéraux et au pare-brise avant sont refermées, en partie supérieure respectivement par deux brancards latéraux 3, 4 et une traverse avant de brancard 5 (fig.2). Les "brancards" correspondent à des portions formant poutres, formant pont par dessus les ouvertures des ouvrants latéraux et du pare-brise avant.

On notera en particulier que la caisse 2 de la structure de véhicule est dépourvue de brancard arrière refermant la partie supérieure du pare-brise arrière. Seule est présente, en partie arrière, une traverse arrière inférieure 6, solidaire d'une structure de tablette arrière 7. Cette structure de tablette arrière 7 s'étend transversalement à l'intérieur d'un habitacle du véhicule, en avant de la traverse arrière inférieure 6, et est recouverte d'une garniture 8. La structure de tablette arrière 7 s'étend sensiblement horizontalement à l'intérieur de la caisse et va former, recouverte par sa garniture 8, la plage arrière du véhicule, située immédiatement sous le pare-brise arrière. Cette structure de tablette 7 peut supporter de manière usuelle des enceintes, un organe d'éclairage 9 (feux stop) ou autre.

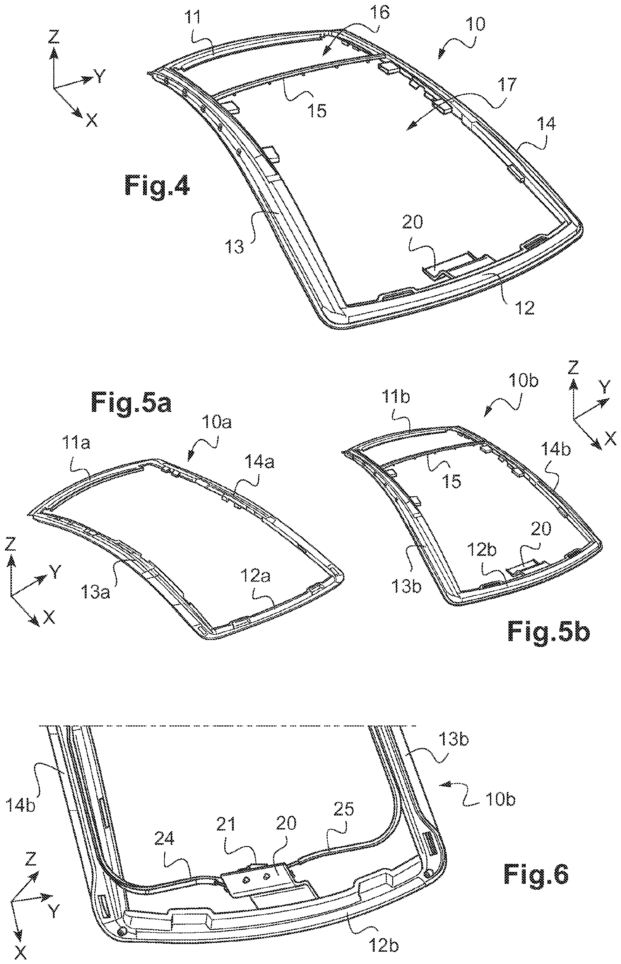

La caisse 2 de la structure de véhicule 1 est surmontée par un cadre de pavillon 10 illustré en figures 4, 5a, 5b. Le cadre de pavillon 10 forme une structure de soutien encadrant la surface du toit, et servant de support au toit.

Le cadre 10 définit une ou plusieurs ouvertures 16, 17 en son centre, ouvertures qui peuvent être utilisées comme ouvertures de lumière. Ces ouvertures peuvent par exemple être recouvertes d'éléments transparents, tels qu'une ou plusieurs vitres fixes et/ou une ou plusieurs vitres mobiles. Le cadre 10 comprend ainsi au moins une traverse extrême avant 11 et une traverse extrême arrière 12 reliées par des poutres longitudinales 13, 14. Le cadre 10 forme ici un cadre continu.

Sur la figure 1, le cadre 10 est représenté en position assemblée sur la caisse 2, notamment sur des faces supérieures de la caisse. La traverse extrême avant 11 est posée sur la traverse avant 5 de brancard, la poutre longitudinale gauche 13 est posée sur le brancard latéral gauche 4, la traverse extrême arrière 12 est posée sur la traverse arrière inférieure 6 de la caisse, et la poutre longitudinale droite 14 referme le cadre le long du brancard latéral droit 3 sur lequel il est posé. Dans l'exemple de la figure 4, le cadre 10 comprend en outre une traverse interne avant 15 séparant deux ouvertures 16, 17.

Le cadre 10 représenté est configuré pour pouvoir servir de support à un toit mobile obturant l'ouverture 16 et à au moins une partie arrière vitrée formant un pare-brise arrière obturant l'ouverture 17. Dans l'exemple représenté figure 1, l'ouverture avant 16 du cadre est obturée par un toit mobile 26 et la partie arrière vitrée 27 obture entièrement l'ouverture 17 offrant une vision panoramique aux passagers arrière.

L'ouverture 17 pourrait toutefois comprendre une partie arrière fermée par la partie vitrée arrière, le reste de l'ouverture étant obturé par un toit tôlé ou composite. Dans ce cas, on peut prévoir une bande transversale de soutien entre la partie vitrée arrière et le toit tôlé ou composite servant de bord de collage. Une telle bande transversale de soutien ne forme pas une partie du cadre mais est rajoutée, ce qui permet de réaliser une bande de faible section à faible encombrement, notamment non tubulaire.

Le terme toit tôlé englobe ici un toit en tôle d'acier, mais aussi un toit réalisé à partir d'une plaque opaque en tout autre métal, par exemple en alliage d'aluminium, ou à partir d'une plaque opaque ou translucide, par exemple en matériau composite.

Dans le mode de réalisation représenté, le cadre 10 forme une structure tridimensionnelle creuse, de type tubulaire, s'étendant de manière continue tout autour de l'ouverture -ou des ouvertures- de lumière 16, 17, du cadre.

Pour former cette structure tubulaire creuse, le cadre est ici obtenu par assemblage d'une demi-coque inférieure 10a et d'une demi-coque supérieure 10b. Ces demi-coques sont assemblées de préférence suivant une direction sensiblement verticale. Chaque demi-coque 10a, 10b comprend respectivement une partie 11a, 11b de la traverse extrême avant 11, une partie 12a, 12b, de la traverse extrême arrière 12, une partie 13a, 13b de la poutre longitudinale gauche 13 et une partie 14a, 14b de la poutre longitudinale droite 14.

La structure tubulaire tridimensionnelle ainsi obtenue présente une rigidité suffisante pour reprendre une partie des efforts soutenus par la caisse dans les conceptions antérieures. II est alors possible d'alléger la structure de la caisse, notamment au niveau des sections de type poutre creuse courant le long des hauts de brancard de la caisse 2 du véhicule.

Une géométrie donnée de demi-coque supérieure peut ainsi être combinée avec des géométries distinctes de demi-coque inférieure, ce qui permet de d'adapter un même toit ou une même groupe de toits, à différents modèles de caisse du véhicule.

En outre, une même géométrie de demi-coque supérieure permet l'assemblage de différents types de toits.

Dans l'exemple, la demi-coque supérieure 10b porte la traverse interne avant 15 du cadre.

La structure de véhicule comporte en outre un support 20 pour un organe d'actionnement 21 du toit mobile. Ce support 20 est disposé entre la structure de tablette arrière 7 et sa garniture 8, à proximité de la traverse extrême arrière 12 du cadre 10 et de la traverse arrière inférieure 6 de la caisse 2. Ainsi, l'organe d'actionnement 21 et son support 20 sont invisibles depuis l'intérieur de l'habitacle, car cachés par la garniture 8, tel que visible sur la fig. 3. L'organe d'actionnement 21 reste néanmoins aisément accessible via la garniture 8.

Dans l'exemple représenté, ce support 20 est solidaire du cadre 10, plus particulièrement de sa demi-coque supérieure 10b.

L'invention n'est toutefois pas limitée à ce mode de réalisation, et le support pourrait être intégré à la structure de tablette 7 ou reposer sur cette dernière, ou être intégré à la demi-coque inférieure 10a.

Dans l'exemple, la structure de tablette 7 comprend un logement 23 recevant le support 20 de l'organe d'actionnement. Il est ici situé sous l'organe d'éclairage 9, lequel est fixé à la garniture 8 (voir fig. 3), de sorte qu'il est possible d'utiliser une même alimentation électrique pour les deux organes. On notera en particulier que le support 20 repose sur le fond du logement 23. Ceci permet de limiter une fatigue éventuelle du support et de réduire les éventuelles vibrations subies par le support.

Par ailleurs, la structure tubulaire du cadre 10 permet de loger des éléments de câblage utiles à l'actionnement du toit mobile. Ainsi, tel que visible sur la figure 6, des câbles d'entrainement 24, 25 du toit mobile reliés à l'organe d'actionnement 21 courent à l'intérieur des côtés 13, 14 du cadre 10, ici fixés sur la demi-coque supérieure 10b, jusqu'au toit mobile à actionner. Les parties de câble d'entrainement 24, 25 immédiatement adjacentes au support 20 peuvent reposer sur la structure de tablette 7 et y être fixées près le montage du cadre 10 sur la caisse 2.

Dans le mode réalisation décrit en référence aux figures, il est ainsi possible de monter l'organe d'actionnement 21 et son câblage sur le cadre de pavillon 10, notamment sur sa demi-coque supérieure 10b, avant de monter le cadre 10 sur la caisse 2, malgré la position déportée de l'organe d'actionnement. Les différentes parties de toit mobile 26 et fixes 17 peuvent également être montées sur le cadre 10 préalablement à son assemblage à la caisse 2 : on obtient ainsi un pavillon 30 qui peut être monté d'un bloc sur la caisse 2.

L'invention ne se limite pas aux exemples de réalisation décrits et peut se décliner en de nombreuses variantes. Le cadre pourrait être formé autrement que par l'assemblage d'une demi-coque supérieure et d'une demi-coque inférieure en matière polymère. Par exemple, il pourrait être obtenu par des techniques de soufflage de préforme polymères, ou par des techniques connues de mise en forme de structure tubulaire métalliques. Il pourrait en outre ne pas présenter de structure tubulaire, pourvu qu'il soit continu sur sa périphérie.

## Revendications

1. Structure (1) de véhicule automobile à toit ouvrant comprenant :
- une caisse (2) comprenant en partie supérieure des brancards latéraux (3, 4) comprenant les bords supérieurs des ouvertures de portes latérales, une traverse avant de brancard (5) et en partie arrière une traverse arrière inférieure (6) dont est solidaire une structure de tablette (7) s'étendant à l'intérieur d'un habitacle du véhicule arrière et recouverte d'une garniture (8),
- un cadre de pavillon (10) définissant au moins une ouverture (16, 17) et étant configuré pour pouvoir servir de support à au moins un toit mobile (26) obturant une partie de l'ouverture (16, 17) et à au moins une partie arrière vitrée (27) formant un pare-brise arrière obturant une autre partie de l'ouverture (16, 17), le cadre de pavillon (10) comprenant au moins une traverse extrême avant (11) et une traverse extrême arrière (12) reliées par des poutres longitudinales (13, 14),
**caractérisée en ce que** :
- le cadre de pavillon (10) forme un cadre continu monté sur des faces supérieures des brancards latéraux (3, 4), de la traverse avant de brancard (5) et de la traverse arrière inférieure (6) de la caisse, la traverse extrême arrière (12) du cadre de pavillon étant montée sur la traverse arrière inférieure (6) de la caisse,
- un support (20) pour un organe d'actionnement (21) du toit mobile est disposé entre la structure de tablette arrière (7) et sa garniture (8), à proximité de la traverse extrême arrière (6) du cadre de pavillon.

2. Structure (1) de véhicule selon la revendication 1, **caractérisée en ce que** la structure de tablette (7) comprend un logement (23) recevant le support (20) de l'organe d'actionnement.

3. Structure (1) de véhicule selon la revendication 1 ou 2, **caractérisée en ce que** le support (20) de l'organe d'actionnement est solidaire du cadre de pavillon (10), notamment d'une portion de sa traverse extrême arrière (12).

4. Structure (1) de véhicule selon l'une des revendications 1 à 3, **caractérisée en ce que** le cadre de pavillon (10) est de section creuse, par exemple de type tubulaire, et **en ce que** des éléments de câblage (24, 25) utiles à l'actionnement du toit mobile sont logés à l'intérieur du cadre de pavillon.

5. Structure (1) de véhicule selon l'une quelconque des revendications 1 à 4, **caractérisée en ce qu'**elle comprend un organe d'éclairage (9) intégré à la garniture (8), notamment situé au dessus du support (20) de l'organe d'actionnement.

6. Cadre (10) de pavillon de véhicule automobile définissant au moins une ouverture (16, 17), le cadre étant configuré pour être assemblé sur des faces supérieures de brancards latéraux (3, 4) d'une caisse (2) de véhicule automobile, ainsi que sur des faces supérieures d'une traverse avant (5) de brancard et d'une traverse arrière inférieure (6) de la caisse, et étant configuré pour pouvoir servir de support à au moins un toit mobile (26) et à au moins une partie arrière vitrée (27) formant un pare-brise arrière, le cadre comprenant au moins une traverse extrême avant (11) et une traverse extrême arrière (12) reliées par des poutres longitudinales (13, 14), **caractérisé en ce que** le cadre (10) forme un cadre continu et **en ce qu'**une portion de la traverse extrême arrière (12) du cadre est solidaire d'un support (20) destiné à soutenir un organe d'actionnement du toit mobile, ledit support (20) s'étendant en direction de la traverse extrême avant (11) du cadre, du côté du cadre destiné à être assemblé à la caisse du véhicule.

7. Cadre (10) de pavillon selon la revendication 6, **caractérisé en ce qu'**il forme un cadre de section creuse, par exemple de type tubulaire.

8. Cadre (10) de pavillon selon la revendication 7, **caractérisé en ce que** le cadre tubulaire comprend un assemblage d'une demi-coque supérieure (10b) avec une demi-coque inférieure (10a).

9. Pavillon (30) de véhicule automobile, **caractérisé en ce qu'**il comprend un cadre (10) de pavillon selon l'une des revendications 6 à 8, un toit mobile (26) supporté en partie par la traverse extrême avant du cadre (11), une partie arrière vitrée (27) supportée en partie par la traverse extrême arrière (12) et un organe d'actionnement (21) du toit mobile supporté par le support (20) du cadre, optionnellement la partie arrière vitrée (27) s'étendant en continu jusqu'à une traverse interne avant (15) du cadre de pavillon la séparant du toit mobile (26).

10. Pavillon (30) selon la revendication 9, **caractérisé en ce que** le cadre (10) de pavillon forme un cadre de section creuse, par exemple de type tubulaire, continu recevant des éléments de câblage (24, 25) utiles à l'actionnement du toit mobile.

## Patentansprüche

1. Kraftfahrzeugstruktur (1) mit zu öffnendem Dach, welche umfasst:
- eine Karosserie (2), die im oberen Teil seitliche Dachlängsträger (3, 4), welche die oberen Ränder der Öffnungen von Seitentüren umfassen, einen vorderen Dachquerträger (5) und im hinteren Teil einen unteren hinteren Querträger (6), mit dem eine Ablagestruktur (7) fest verbunden ist, die sich im Inneren eines Innenraums des hinteren Fahrzeugs erstreckt und mit einer Verkleidung (8) bedeckt ist, umfasst,
- einen Dachrahmen (10), der wenigstens eine Öffnung (16, 17) definiert und dafür ausgelegt ist, als Träger für wenigstens ein bewegliches Dach (26), das einen Teil der Öffnung (16, 17) verschließt, und für wenigstens einen verglasten hinteren Teil (27), der eine hintere Windschutzscheibe bildet, die einen anderen Teil der Öffnung (16, 17) verschließt, dienen zu können, wobei der Dachrahmen (10) wenigstens einen vorderen äußersten Querträger (11) und einen hinteren äußersten Querträger (12) umfasst, die durch Längsträger (13, 14) verbunden sind,
**dadurch gekennzeichnet, dass**:
- der Dachrahmen (10) einen durchgehenden Rahmen bildet, der auf Oberseiten der seitlichen Dachlängsträger (3, 4), des vorderen Dachquerträgers (5) und des unteren hinteren Querträgers (6) angebracht ist, wobei der hintere äußerste Querträger (12) des Dachrahmens auf dem unteren hinteren Querträger (6) der Karosserie angebracht ist,
- ein Halter (20) für ein Betätigungsorgan (21) des beweglichen Daches zwischen der hinteren Ablagestruktur (7) und ihrer Verkleidung (8) angeordnet ist, in der Nähe des hinteren äußersten Querträgers (6) des Dachrahmens.

2. Fahrzeugstruktur (1) nach Anspruch 1, **dadurch gekennzeichnet, dass** die Ablagestruktur (7) eine Aufnahme (23) umfasst, die den Halter (20) des Betätigungsorgans aufnimmt.

3. Fahrzeugstruktur (1) nach Anspruch 1 oder 2, **dadurch gekennzeichnet, dass** der Halter (20) des Betätigungsorgans mit dem Dachrahmen (10), insbesondere mit einem Abschnitt von dessen hinterem äußerstem Querträger (12), fest verbunden ist.

4. Fahrzeugstruktur (1) nach einem der Ansprüche 1 bis 3, **dadurch gekennzeichnet, dass** der Dachrahmen (10) einen hohlen Querschnitt aufweist, zum Beispiel von rohrförmigem Typ, und dadurch, dass Verdrahtungselemente (24, 25), die für die Betätigung des beweglichen Daches von Nutzen sind, im Inneren des Dachrahmens untergebracht sind.

5. Fahrzeugstruktur (1) nach einem der Ansprüche 1 bis 4, **dadurch gekennzeichnet, dass** sie ein Beleuchtungsorgan (9) umfasst, das in die Verkleidung (8) integriert ist und sich insbesondere oberhalb des Halters (20) des Betätigungsorgans befindet.

6. Dachrahmen (10) eines Kraftfahrzeugs, welcher wenigstens eine Öffnung (16, 17) definiert, wobei der Rahmen dafür ausgelegt ist, auf Oberseiten von seitlichen Dachlängsträgern (3, 4) einer Karosserie (2) des Kraftfahrzeugs montiert zu werden, sowie auf Oberseiten eines vorderen Dachquerträgers (5) und eines unteren hinteren Querträgers (6) der Karosserie, und dafür ausgelegt ist, als Träger für wenigstens ein bewegliches Dach (26) und für wenigstens einen verglasten hinteren Teil (27), der eine hintere Windschutzscheibe bildet, dienen zu können, wobei der Rahmen wenigstens einen vorderen äußersten Querträger (11) und einen hinteren äußersten Querträger (12) umfasst, die durch Längsträger (13, 14) verbunden sind, **dadurch gekennzeichnet, dass** der Rahmen (10) einen durchgehenden Rahmen bildet, und dadurch, dass ein Abschnitt des hinteren äußersten Querträgers (12) des Rahmens mit einem Halter (20) fest verbunden ist, der dazu bestimmt ist, ein Betätigungsorgan des beweglichen Daches abzustützen, wobei sich der Halter (20) von der Seite des Rahmens aus, die dazu bestimmt ist, an der Karosserie des Fahrzeugs montiert zu werden, in Richtung des vorderen äußersten Querträgers (11) erstreckt.

7. Dachrahmen (10) nach Anspruch 6, **dadurch gekennzeichnet, dass** er einen Rahmen mit hohlem Querschnitt bildet, zum Beispiel von rohrförmigem Typ.

8. Dachrahmen (10) nach Anspruch 7, **dadurch gekennzeichnet, dass** der rohrförmige Rahmen eine Baugruppe aus einer oberen Halbschale (10b) und einer unteren Halbschale (10a) umfasst.

9. Dach (30) eines Kraftfahrzeugs, **dadurch gekennzeichnet, dass** es einen Dachrahmen (10) nach einem der Ansprüche 6 bis 8, ein bewegliches Dach (26), das zum Teil von dem vorderen äußersten Querträger (11) des Rahmens getragen wird, einen verglasten hinteren Teil (27), der zum Teil von dem hinteren äußersten Querträger (12) getragen wird, und ein Betätigungsorgan (21) des beweglichen Daches, das von dem Halter (20) des Rahmens getragen wird, umfasst, wobei sich der verglaste hintere Teil (27) optional durchgehend bis zu einem vorderen inneren Querträger (15) des Dachrahmens erstreckt, der ihn von dem beweglichen Dach (26) trennt.

10. Dach (30) nach Anspruch 9, **dadurch gekennzeichnet, dass** der Dachrahmen (10) einen durchgehenden Rahmen mit hohlem Querschnitt bildet, zum Beispiel von rohrförmigem Typ, der Verdrahtungselemente (24, 25) aufnimmt, die für die Betätigung des beweglichen Daches von Nutzen sind.

## Claims

1. Motor vehicle structure (1) with a sunroof comprising:
- a body (2) comprising in its top part lateral sills (3, 4) comprising the upper edges of the lateral door openings, a sill front crossmember (5), and, at the rear part, a lower rear crossmember (6) with which there is integral a shelf structure (7) extending inside a rear passenger space of the vehicle, and covered with a lining (8) ;
- a roof frame (10) defining at least one opening (16, 17), and being configured to be able to act as a support for at least one movable roof (26) closing one part of the opening (16, 17) and for at least one glazed rear part (27) forming a rear windshield closing another part of the opening (16, 17), the roof frame (10) comprising at least one front end crossmember (11) and one rear end crossmember (12) which are connected by longitudinal beams (13, 14),
**characterized in that**:
- the roof frame (10) forms a continuous frame which is mounted on upper faces of the lateral sills (3, 4), of the sill front crossmember (5) and the lower rear crossmember (6) of the body, the rear end crossmember (12) of the roof frame being mounted on the lower rear crossmember (6) of the body;
- a support (20) for an actuation member (21) of the movable roof is disposed between the rear shelf structure (7) and its lining (8), close to the rear end crossmember (6) of the roof frame.

2. Vehicle structure (1) according to Claim 1, **characterized in that** the shelf structure (7) comprises a receptacle (23) which receives the support (20) of the actuation member.

3. Vehicle structure (1) according to Claim 1 or 2, **characterized in that** the support (20) of the actuation member is integral with the roof frame (10), in particular with a portion of its rear end crossmember (12).

4. Vehicle structure (1) according to one of Claims 1 to 3, **characterized in that** the roof frame (10) has a hollow cross-section, for example of the tubular type, and **in that** wiring elements (24, 25) which are useful for the actuation of the movable roof are accommodated inside the roof frame.

5. Vehicle structure (1) according to any one of Claims 1 to 4, **characterized in that** it comprises a lighting unit (9) incorporated in the lining (8), in particular situated above the support (20) for the actuation member.

6. Motor vehicle roof frame (10), which defines at least one opening (16, 17), the frame being configured to be assembled on upper faces of lateral sills (3, 4) of a motor vehicle body (2), as well as on upper faces of a sill front crossmember (5) and a lower rear crossmember (6) of the body, and being configured to be able to act as a support for at least one movable roof (26) and for at least one glazed rear part (27) forming a rear windshield, the frame comprising at least one front end crossmember (11) and one rear end crossmember (12) which are connected by longitudinal beams (13, 14), **characterized in that** the frame (10) forms a continuous frame, and **in that** a portion of the rear end crossmember (12) of the frame is integral with a support (20) which is designed to support an actuation member of the movable roof, said support (20) extending towards the front end crossmember (11) of the frame, on the side of the frame which is designed to be assembled on the body of the vehicle.

7. Roof frame (10) according to Claim 6, **characterized in that** it forms a frame with a hollow cross-section, for example of the tubular type.

8. Roof frame (10) according to Claim 7, **characterized in that** the tubular frame comprises an assembly of an upper half-shell (10b) with a lower half-shell (10a).

9. Motor vehicle roof (30), **characterized in that** it comprises a roof frame (10) according to one of Claims 6 to 8, a movable roof (26) which is supported partly by the front end crossmember of the frame (11), a glazed rear part (27) which is supported partly by the rear end crossmember (12), and a member (21) for actuation of the movable roof which is supported by the support (20) of the frame, the glazed rear part (27) optionally extending continuously as far as a front inner crossmember (15) of the roof frame which separates it from the movable roof (26).

10. Roof (30) according to Claim 9, **characterized in that** the roof frame (10) forms a frame with a hollow cross-section, for example of a continuous tubular type, receiving wiring elements (24, 25) which are useful for the actuation of the movable roof.
